# EUROPÄISCHE PATENTSCHRIFT

(11) **EP 0 555 735 B1**
(45) Veröffentlichungstag und Bekanntmachung des Hinweises auf die Patenterteilung: **04.10.1995**
(21) Anmeldenummer: 93101587.9
(22) Anmeldetag: 02.02.1993
(51) Int. Cl.: E03F 5/10, C04B 18/14

(54) **Verfahren zur Herstellung von Beton- oder Stahlbetonbecken**
Method of manufacture of concrete and reinforced concrete basins
Procédé de fabrication de cuves en béton ou béton armé

(30) Priorität: 12.02.1992 DE 4203987
(43) Veröffentlichungstag der Anmeldung: 18.08.1993
(73) Patentinhaber: PASSAVANT-WERKE AG, 65322 Aarbergen 7 (DE)
(72) Erfinder: Kunz, Dieter, Dipl.-Ing., W-6209 Aarbergen 1 (DE); Bachon, Ulrich, Dipl.-Ing., W-6252 Diez (DE)

(56) Entgegenhaltungen:
- AT-A- 351 996
- FR-A- 2 552 466
- Section Ch, Week U46, 18. Dezember 1973 Derwent Publications Ltd., London, GB; Class L02, AN 73-70430 & JP-B-48 734 (ELECTRO CHEMICAL IND. CO.)

## Beschreibung

Die Erfindung betrifft ein Verfahren zur Herstellung von Beton- und Stahlbetonbecken, die zur Behandlung, Fortleitung oder Speicherung wasser- oder bodengefährdende Stoffe enthaltender Wässer oder Abwässer verwendet werden.

Derartige Becken werden in der Regel in einer aus Innen- und Außenschalung bestehenden Dauerform durch rüttelndes Einformen von zementgebundenem Beton hergestellt und nach dem sofortigen Ausschalen und Abbinden des Betons innen mit einem geeigneten Belag beschichtet, um den Beton vor dem Angriff und dem Eindringen der im Abwasser oder Oberflächenwasser enthaltenen Inhaltsstoffe (zB organische und mineralische Kohlenwasserstoffe) und wassergefährdenden Flüssigkeiten zu schützen. Das (mehrschichtige) Aufbringen der Beschichtung ist ein zeitaufwendiger Vorgang, bei dem auch die Vorschriften zur Arbeitssicherheit beachtet werden müsssen, weil aus der Beschichtungsmasse u.U. schädliche Gase und Dämpfe freigesetzt werden. Die beschichteten Betonflächen müssen ferner vorbereitet werden, damit die Beschichtung dauerhaft bindet.

Die Aufgabe, diese zeit- und kostenaufwendige Beschichtung zu vermeiden und ein anderes Verfahren zum Erreichen der Schutzfunktion zu finden, ist schon dadurch gelöst worden, daß dem Beton Silikatstaub zugegeben wird, dessen Korngröße zum überwiegenden Teil gleich oder kleiner als 0,125 mikrometer ist (Z. Beton, H.12/91 - S.618). Ferner ist bekannt, daß das Abbinden ("Hydratisieren") des Betons durch Zugabe eines Verzögerungsmittels verzögert werden kann. Die Zugabe von Silikatstaub (sog. Microsilica) ergibt einen Beton mit erhöhter Druckfestigkeit, Spaltzugfestigkeit und verringerter Wassereindringtiefe.

Mit diesem bekannten Verfahren wird ein Wasser- und Abwasserbecken geschaffen, das ohne Innenbeschichtung auch gegen gefährliche Flüssigkeiten und Abwasserinhaltsstoffe beständig und damit verhältnismäßig dicht ist. Die Dichtigkeit wird durch die Reduzierung der Kapillarporen und die Verfeinerung der Porenstruktur in dem mit Silikatstaub versetzten Beton erreicht.

Es ist ferner bekannt, die Widerstandsfähigkeit und Dichtigkeit von Betonflächen durch das Aufbringen von Epoxidharzen zu verbessern ("Ullmanns Enzyklopädie der Technischen Chemie", 4. Aufl., Band 8, S.337). Dieses Aufbringen ist eine mit einer Beschichtung vergleichbare Versiegelung der Betonfläche, die die Aufgabe, die Beschichtung ganz zu vermeiden, nicht löst. Auf der anderen Seite befriedigt die Widerstandsfestigkeit und die Dichtheit eines lediglich mit Microsilica versetzten Betons noch nicht. Die sich aus diesem Nachteil ableitende Aufgabe, die Dichtigkeit und Widerstandsfestigkeit des Betons gegen die genannten Stoffe ohne eine Beschichtung zu erhöhen, wird erfindungsgemäß unter bekannter Verwendung eines Abbinde-Verzögerungsmittels dadurch gelöst, daß als Verzögerungsmittel ein auch als Imprägniermittel wirkendes wasserlösliches Epoxidharz verwendet wird. Das wasserlösliche Epoxidharz wirkt nicht wie eine versiegelnde Beschichtung, sondern kann mit dem Hydratisierungswasser in den Beton eindringen und dort die Mikroporen verschließen. Besonders vorteilhaft ist es, wenn das Epoxidharz mindestens zweimal aufgebracht wird, zuerst nach dem Entformen ("Entschalen") und dann kurz nach Beginn des Abbindens. Beim zweiten Aufbringen dringt das Imprägniermittel noch tiefer in den Beton ein und verschließt auch dort alle Poren.

Um an dem verhältnismäßig teuren Silikatstaub zu sparen, wird weiterhin vorgeschlagen, nur die mit den gefährlichen Stoffen oder Inhaltsstoffen in Berührung kommenden Innenflächen des Beckens aus dem mit Microsilica versetzten Beton herzustellen.

Dies kann z.B. dadurch geschehen, daß der mit Silikatstaub versetzte Beton auf die Innenschalung gespritzt und der Normalbeton erst nach Frühabbindung der aufgespritzten Schicht in die dann eingesetzte Außenschalung eingebracht wird. Das Becken kann danach sofort ausgeformt werden. Es ist auch denkbar, eine steife Innenschicht aus dem Spezial-Beton herzustellen und diese dann in eine Außenform zwecks Auffüllen mit Normalbeton einzusetzten.

## Patentansprüche

1. Verfahren zur Herstellung von Beton- oder Stahlbetonbecken zur Behandlung, Fortleitung oder Speicherung wasser- oder bodengefährdende Stoffe enthaltender Abwässer oder dieser Stoffe, durch rüttelndes Einformen von zementgebundenem Beton, dem Silikatstaub mit einer Korngröße von zum überwiegenden Teil gleich oder kleiner 0,125 mikrometer beigemischt ist, in einer entschalbaren Dauerform, bei dem ein das Abbinden des Zements verzögerndes Verzögerungsmittel verwendet wird, wobei das Becken sofort nach dem Einformen aus der Dauerform entschalt wird, **dadurch gekennzeichnet**, daß als Verzögerungsmittel ein auch als Imprägniermittel wirkendes wasserlösliches Epoxidharz verwendet wird.

2. Verfahren nach Anspruch 1, **dadurch gekennzeichnet**, daß das Imprägniermittel mindestens zweimal aufgebracht wird, zuerst nach dem Entformen und dann kurz nach Beginn des Abbindens.

## Claims

1. Procedure for production of concrete or reinforced concrete tanks for the treatment, discharge or storage of substances which are hazardous for water and soil or water water containing such substances consisting in jolting molding of cement-concrete, mixed with silicate powder with a grain size mainly of ≦ 0,125 µ, into a permanent and removeable mold, using a delayer to inhibit setting of cement, where the permanent mold will be removed from the tank right after the molding process, **characterized in that** the used delayer is epoxy resin which is soluble in water and also serves as impregnating agent.

2. Procedure according to claim 1, **characterized in that** the impregnating agent is applied at least twice, first following the removal of the mold and second shortly after the setting process has begun.

## Revendications

1. Procédure pour la production des bassins en béton ou béton armé destinés au traitement, la décharge ou l'entrepôt des substances dangéreuses pour l'eau ou la terre ou pour les eaux résiduaires contenant telles substances consistant dans le moulage par secousses de béton de ciment lequel a été mélangé avec poudre de silicate ayant en majorité une granulation de ≦ 125 µ, dans une moule permanente et amovible, en utilisant un agent retardateur retardant la prise du ciment, où la moule est enlevée immédiatement après le moulage, **caractérisée en ce que** l'agent retardateur utilisé est l'époxyrésine lequel est soluble dans l'eau et sert au même temps comme liquide d'imprégnation.

2. Procédure selon revendication 1, **caractérisée en ce que** le liquide d'imprégnation est appliqué au moins deux fois, la permière fois faisant suite au démoulage et la seconde fois juste après le commencement de la prise du béton.
